# EUROPEAN PATENT APPLICATION

(11) **EP 4 462 256 A1**
(43) Date of publication of application: **13.11.2024**
(21) Application number: 24175097.5
(22) Date of filing: 10.05.2024
(51) Int. Cl.: G06F 9/50

(54) **CLOUD NATIVE NETWORK FUNCTION DEPLOYMENT**

(30) Priority: 12.05.2023 US 202318196450
(71) Applicant: VMware LLC, Palo Alto, CA 94304 (US)
(72) Inventor: Lin, Xiaojun, Beijing, 100190 (CN); Cui, Liang, Beijing, 100190 (CN); Cheng, Chung-Ta, Palo Alto, 94304 (US); Srinivasan, Aravind, Palo Alto, 94304 (US); Sabin, Todd, Morganville, 07751 (US)
(74) Representative: Dilg, Haeusler, Schindelmann Patentanwaltsgesellschaft mbH

(57) **Abstract**

Example methods and systems for cloud native network function deployment are described. One example may involve a computer system obtaining cluster configuration information associated with multiple single node clusters (SNCs). Based on the cluster configuration information, the computer system may configure (a) a first SNC on a first node and (b) a second SNC on a second node. The computer system may configure (a) a first virtual agent associated with the first SNC, and (b) a second virtual agent associated with the second SNC. In response to receiving a deployment request to deploy a first pod and a second pod, the computer system may process the deployment request by (a) deploying, using the first virtual agent, the first pod on the first SNC, and (b) deploying, using the second virtual agent, the second pod on the second SNC.

## Description

### BACKGROUND

As defined by the Cloud Native Computing Foundation (CNCF), cloud native technologies empower organizations to build and run scalable applications in modern, dynamic environments such as public, private and hybrid clouds. In practice, cloud native applications may rely on microservice- and container-based architectures. For example, a cloud native application may include multiple services (known as microservices) that run independently in self-contained, lightweight containers. The Kubernetes^{®} microservices system by The Linux Foundation^{®} has risen in popularity in recent years as a substantially easy way to support, scale and manage cloud native applications deployed in clusters. In practice, it may be desirable to deploy cloud native network functions in a more efficient manner. For example, the cloud native network functions may be associated with a mobile communications system, such as the fifth generation (5G) mobile communications system.

### BRIEF DESCRIPTION OF DRAWINGS

Fig. 1 is a schematic diagram illustrating an example illustrating an example mobile communications system in which cloud native network function deployment may be performed;
Fig. 2 is a schematic diagram illustrating an example computer system to perform cloud native network function deployment;
Fig. 3 is a flowchart of an example process for a computer system to perform cloud native network function deployment;
Fig. 4 is a flowchart of an example detailed process for a computer system to perform cloud native network function deployment;
Fig. 5 is a schematic diagram illustrating a first example of cloud native network function deployment involving three single node clusters (SNCs);
Fig. 6 is a schematic diagram illustrating example SNC configuration information for the example in Fig. 5;
Fig. 7 is a schematic diagram illustrating example application programming interfaces (APIs) supported by a virtual agent in the form of a virtual kubelet;
Fig. 8 is a schematic diagram illustrating an example deployment request to deploy multiple pods across multiple SNCs for the example in Fig. 5;
Fig. 9 is a schematic diagram illustrating an example pod creation request generated and sent by a virtual agent to a particular SNC;
Fig. 10 is a schematic diagram illustrating a second example of cloud native network function deployment according to a hybrid mode;
Fig. 11 is a schematic diagram illustrating an example deployment request to deploy multiple pods across multiple SNCs and stretched clusters for the example in Fig. 10; and
Fig. 12 is a schematic diagram illustrating an example software-defined networking (SDN) environment in which one or more pods may be deployed.

### DETAILED DESCRIPTION

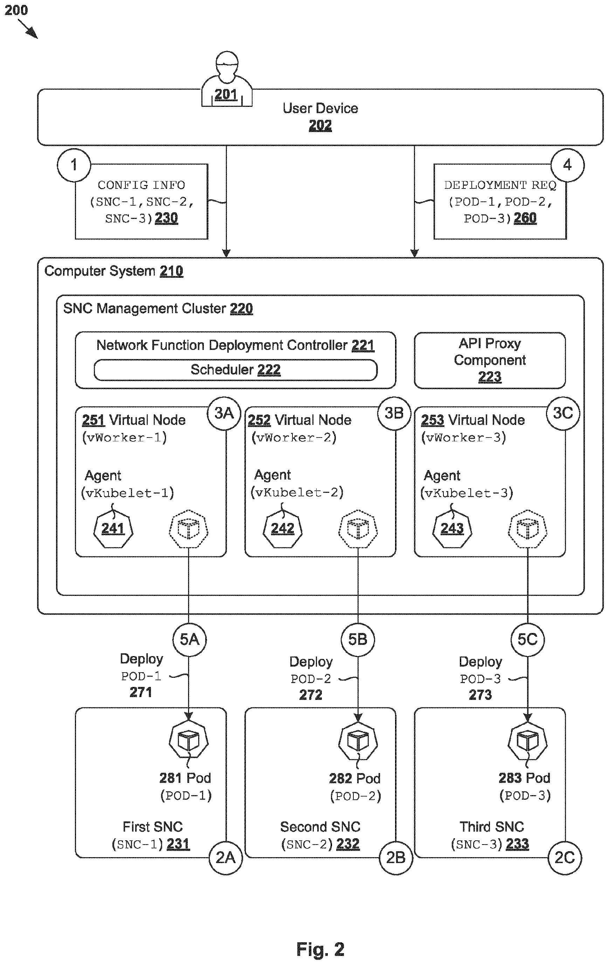

According to examples of the present disclosure, cloud native network function deployment may be performed, particularly in a deployment model that involves multiple single node clusters (SNCs). One example may involve a computer system (see 210 in Fig. 2) obtaining cluster configuration information associated with multiple SNCs that include at least (a) a first SNC and (b) a second SNC that are capable of implementing one or more cloud native network functions. Based on the cluster configuration information, the computer system may configure (a) the first SNC on a first node and (b) the second SNC on a second node (see 231-232 in Fig. 2).

Further, the computer system may configure (a) a first virtual agent associated with the first SNC, and (b) a second virtual agent associated with the second SNC (see 241-242 in Fig. 2). In response to receiving a deployment request to deploy a first pod and a second pod, the computer system may process the deployment request by (a) deploying, using the first virtual agent, the first pod on the first SNC, and (b) deploying, using the second virtual agent, the second pod on the second SNC (see 271-272 and 281-282 in Fig. 2). Using examples of the present disclosure, virtual agents (e.g., virtual kubelets to be described below) may be configured to facilitate pod deployment on multiple SNCs. In a hybrid deployment model that involves both SNCs and stretched clusters, examples of the present disclosure may be implemented to provide a unified platform to support pod deployment on multiple cluster types.

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting. Other embodiments may be utilized, and other changes may be made, without departing from the spirit or scope of the subject matter presented here. It will be readily understood that the aspects of the present disclosure, as generally described herein, and illustrated in the drawings, can be arranged, substituted, combined, and designed in a wide variety of different configurations, all of which are explicitly contemplated herein. Although the terms "first" and "second" are used to describe various elements, these elements should not be limited by these terms. These terms are used to distinguish one element from another. For example, a first element may be referred to as a second element, and vice versa.

### Example 5G system architecture

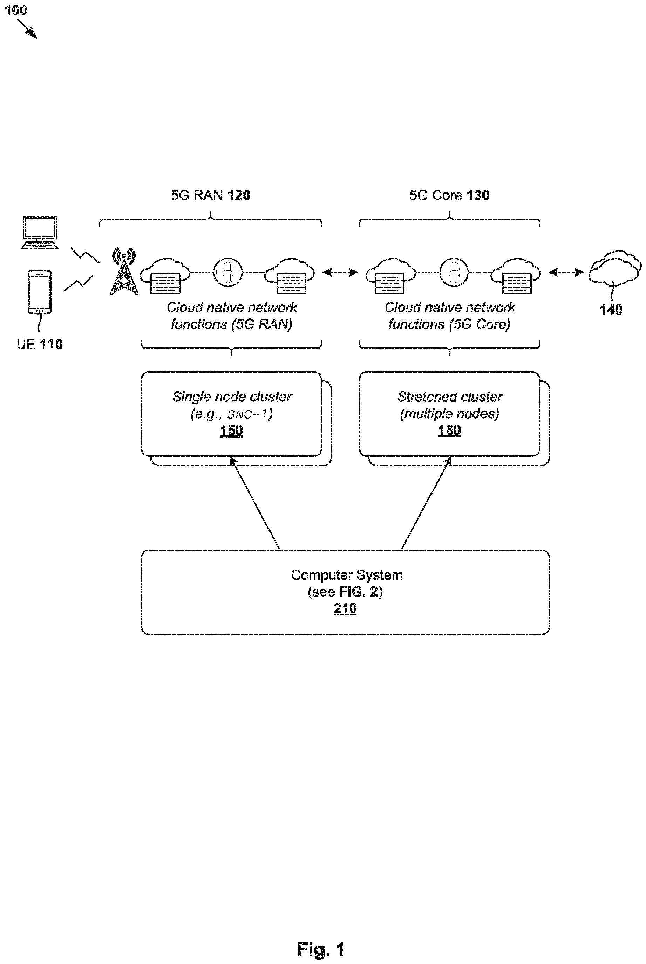

Fig. 1 is a schematic diagram illustrating example mobile communications system 100 in which cloud native network function deployment may be performed. Depending on the desired implementation, mobile communications system 100 may include additional and/or alternative component(s) than that shown in Fig. 1. Throughout the present disclosure, various examples will be discussed using fifth generation (5G) mobile communications system technology in Fig. 1. Example implementation details relating to 5G are described in various technical specifications (TSs) published by the Third Generation Partnership Project (3GPP). One example is the 3GPP TS 23.501 entitled "System architecture for the 5G system," which is incorporated herein by reference. Examples of the present disclosure may be applicable to any suitable future-generation mobile communications systems.

Referring to the example in Fig. 1, mobile communications system 100 in the form of a 5G system may include 5G radio access network (RAN) 120 and a 5G core network 130 that are capable of connecting 5G-capable mobile user equipment (UE) 110 to the Internet 140 (or any other network). Any suitable UE 110 may be used, such as mobile phone, computer laptop, vehicle, Internet of Things (IoT) device, etc. In practice, 5G RAN 120 may include any suitable network functions(s) relating to establishing radio communication with UE 110, such as using 5G new radio (NR) radio interface based on software-defined radio, etc. 5G core network 130 may include any suitable network function(s) relating to, *inter alia,* subscriber data management, charging, mobility management, routing, security, policy control, etc.

Traditionally, most network functions for telecommunications were implemented primarily using specialized hardware, which was expensive to deploy and upgrade. More recently, telecommunications (telco) operators have adopted newer technologies relating to virtualized network function (VNF) and/or cloud native network function (CNF) to implement 5G network functions using virtual machines and/or containers. In practice, the term "cloud native network function" or "containerized network function" may refer generally to a cloud native application (i.e., software implementation) that implements a network function. In practice, CNF may include one or more microservices that are implemented based on cloud native principles, such as immutable infrastructure, declarative application programming interfaces (APIs), repeatable deployment process, etc.

CNFs present a new approach for building complex networking solutions based on the principles of cloud native computing and microservices. There are various benefits for deploying CNFs, such as reduced costs, operational consistency, application resilience, simplified and responsive scaling at a microservice level, simplified integration with enterprise-facing cloud native applications, and improved portability between public, private and hybrid cloud environments, etc. Compared to VNFs that rely on virtual machines (VMs), CNFs implement network functions using containers.

As used herein, the term "container" is used generally to describe an application that is encapsulated with all its dependencies (e.g., binaries, libraries, etc.). For example, multiple containers may be executed as isolated processes inside a VM (also known as a node). Compared to VMs, each "OS-less" container does not include any OS that could weigh 10s of Gigabytes (GB). This makes containers more lightweight, portable, efficient and suitable for delivery into an isolated OS environment. A "pod" may refer generally to a set of one or more containers running on the same node. The term "workload" may refer generally to an application running on container(s). Any suitable container orchestrator (e.g., Kubernetes) may be deployed to manage multiple CNFs.

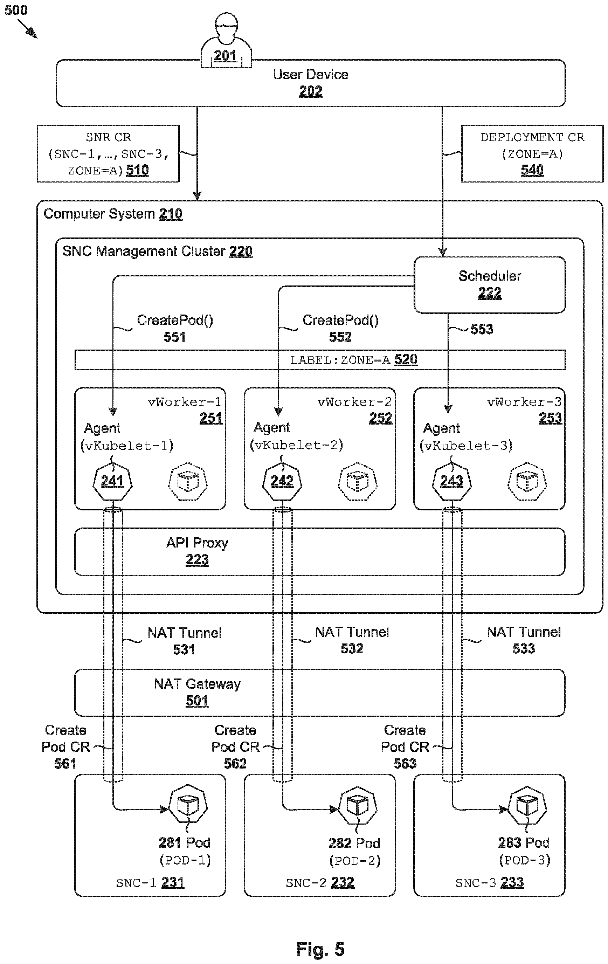

In the example in Fig. 1, 5G core network 130 may include various (e.g., tens of) core network sites, while 5G RAN 120 may include various (e.g., thousands to tens of thousands of) edge network sites, including far edge(s) and near edge(s). A far edge may refer generally to an aggregation point for geographically distributed radio sites hosting RAN and IP routing aggregators. The far edge may also host mobile edge computing software to support provide 5G use cases. Access mobility and user plane termination functions of 5G core network 130 may also reside in the network far edge. A near edge may refer generally to an aggregation point for far edge sites. The near edge may host various services and serve as a peering point to access the Internet and other infrastructure-related cloud services. Any suitable technology may be implemented in mobile communications system 100, such as VMware^{®} Telco Cloud Automation (TCA), VMware^{®} Tanzu Kubernetes Grid (TKG), etc.

Depending on the desired implementation, various Kubernetes clusters may be deployed to implement various network functions of 5G RAN 120 and 5G core network 130, such as single node cluster(s) and stretched cluster(s). See 150-160 in Fig. 1. Here, the term "cluster" may refer generally to a set of one or more nodes for running cloud native application(s). The term "single node cluster" (denoted as SNC) may refer generally to the case of a cluster running on one node. In this case, control plane functions (e.g., control plane pod(s)) and workloads (e.g., worker pod(s)) are co-located on the same node. The term "stretched cluster" may refer generally to a cluster that includes multiple nodes, which may be distributed on different hosts. For example, a stretched cluster may include a first worker node on a first host, a second worker node on a second host, a control plane node on a third host, etc. A stretched cluster may include multiple control plane nodes and multiple worker nodes.

In practice, there are advantages and disadvantages associated with each cluster type. Stretched clusters are suitable for implementing network functions associated with 5G core network 130. Stretched clusters may leverage a Kubernetes scheduler to schedule network function workloads to the desired worker node. However, if the control plane running on one node is malfunctioning, a worker running on another node might be in an unstable state. If the network between the control plane and a worker is disconnected, workloads on that worker will be terminated. Also, the worker usually cannot run behind a network address translation (NAT) gateway. By comparison, SNCs are suitable for network functions associated with 5G RAN 120. Since both the control plane and workloads are on the same node, there is generally no communication issue between them (compared to stretched clusters). Each SNC is independent, meaning that there is no impact on other clusters in the event that the SNC crashes. Also, a worker pod on SNC 150 may also run behind a NAT gateway.

Conventionally, each SNC is deployed individually and separately. For example, if there are one hundred SNCs, the deployment process has to be repeated one hundred times, which lacks efficiency and scalability. Another disadvantage is that, once deployed, SNCs are usually unable to leverage the Kubernetes scheduler to distribute network function deployment workloads. In some cases, a user (e.g., network administrator) might have to install duplicate network function on each SNC, which is inefficient and undesirable. Further, in a hybrid deployment model, SNC(s) and stretched cluster(s) generally have to be deployed separately using different procedures.

### Cloud native network function deployment

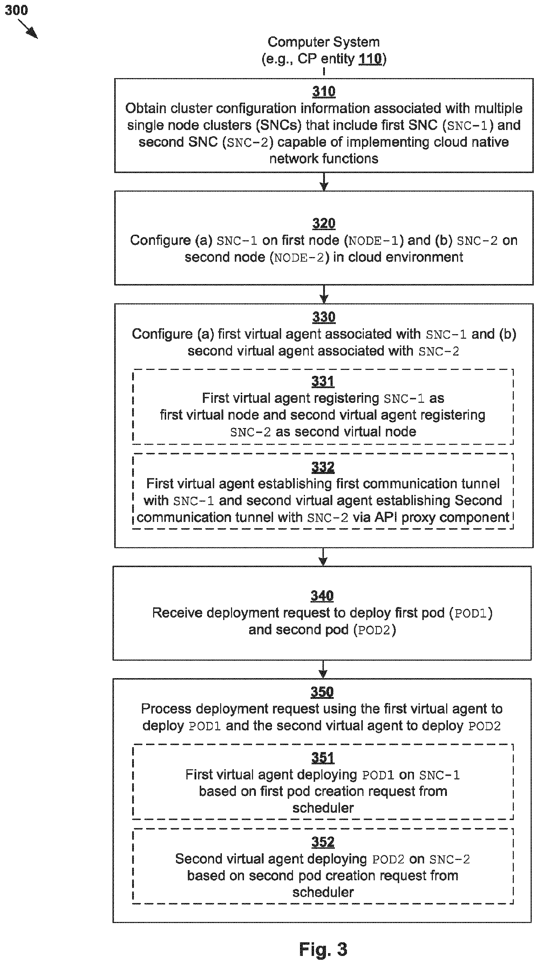

According to examples of the present disclosure, cloud native network function deployment may be performed in an improved manner, particularly in a deployment model that involves multiple single node clusters (SNCs). In the following, various examples will be described using Figs. 2-3. In particular, Fig. 2 is a schematic diagram illustrating example computer system 210 to perform cloud native network function deployment. Fig. 3 is a flowchart of example process 300 for a computer system capable of implementing a management entity to perform cloud native network function deployment. Example process 300 may include one or more operations, functions, or actions illustrated by one or more blocks, such as 310 to 352. Depending on the desired implementation, various blocks may be combined into fewer blocks, divided into additional blocks, and/or eliminated.

In the example in Fig. 2, computer system 210 may support management cluster entity 220 that is capable of configuring SNCs 231-233 and virtual agents 241-243. Management cluster entity 220 is also capable of performing pod deployment on SNCs 231-233 using virtual agents 241-243. Depending on the desired implementation, computer system 210 may represent one virtual/physical machine supporting management cluster entity 220. Alternatively, computer system 210 may represent multiple virtual/physical machines that collectively implement management cluster entity 220. Computer system 210 may include any suitable software and/or hardware components to facilitate cloud native network function deployment. For example, management cluster entity 220 may include network function deployment controller 221 to manage deployments, Kubernetes scheduler 222, API proxy component 223, etc. The example in Fig. 2 will be explained using Fig. 3.

At 230 in Fig. 2 and 310 in Fig. 3, computer system 210 (e.g., using management cluster entity 220) may obtain cluster configuration information associated with multiple SNCs that include at least (a) a first SNC and (b) a second SNC that are capable of implementing one or more cloud native network functions. In the example in Fig. 2, first SNC and second SNC are denoted as *SNC-1* and *SNC-2.* Cluster configuration information 230 may be obtained (e.g., received or retrieved) from user device 202 operated by user 201 (e.g., network administrator) via any suitable interface, such as graphical user interface, command line interface (CLI), API, etc.

At 231-232 in Fig. 2 and 320 in Fig. 3, based on the cluster configuration information, computer system 210 (e.g., using SNC management cluster entity 220) may configure (a) the first SNC on a first node and (b) the second SNC on a second node. In practice, for example, first SNC 231 (*SNC-*1) may be configured on one VM, and second SNC 232 (*SNC*-2) on another VM. For each SNC, both control plane pod(s) and worker pod(s) are co-located on the same node.

At 241-242 in Fig. 2 and 330 in Fig. 3, computer system 210 (e.g., using SNC management cluster entity 220) may configure (a) a first virtual agent associated with the first SNC, and (b) a second virtual agent associated with the second SNC. As used herein, the term "virtual agent" associated with an SNC may refer generally to a software component capable of interacting (e.g., communicating) with the SNC to facilitate cloud native network function deployment on the SNC. Depending on the desired implementation, virtual agent 241/242 may be in the form of virtual kubelet, which is an open-source Kubernetes kubelet implementation that masquerates as a kubelet for the purpose of connecting a Kubernetes cluster to other APIs. A "kubelet" is the primary node agent that runs on each node to, for example, register the node with an API server, etc.

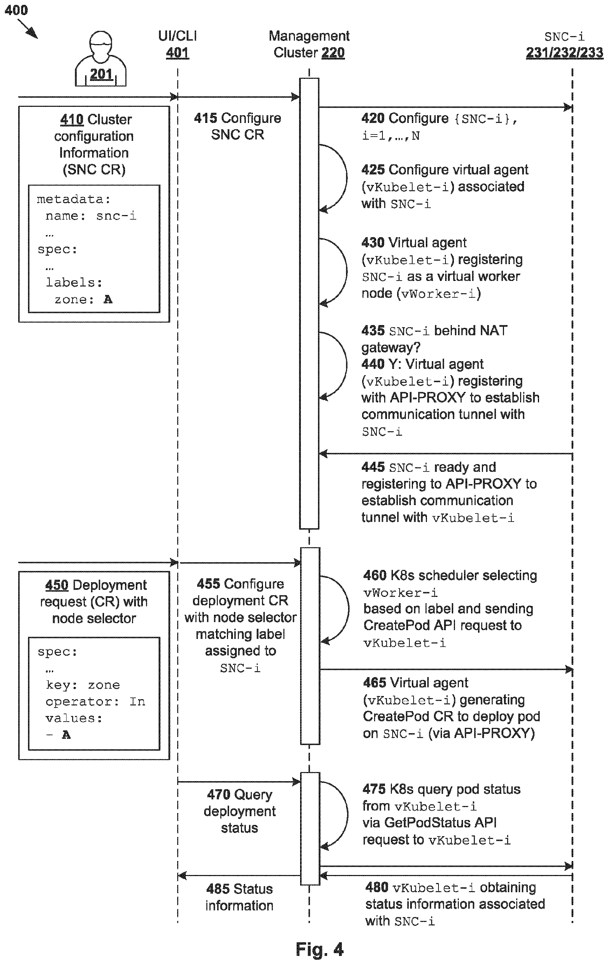

Depending on the desired implementation, at 331 in Fig. 3, virtual agent 241/242 may be configured to register SNC 231/232 as virtual node 251/252. This way, Kubernetes schedule management ability may be extended to SNCs during workload deployment. This should be contrasted against conventional approaches that are unable to leverage the scheduler to distribute workloads among SNCs. Further, at 332 in Fig. 3, virtual agent 241/242 may be configured to establish a communication tunnel with SNC 231/232, such as via API proxy component 223 in a scenario where SNC 231/232 is located behind a network address translation (NAT) gateway. Blocks 331-332 will be discussed further using Figs. 4-8.

At 260 in Fig. 2 and 340-352 in Fig. 3, in response to receiving a deployment request to deploy a first pod and a second pod, computer system 210 may process the deployment request using virtual agent 241/242. This may involve (a) first virtual agent 241 deploying the first pod on first SNC 231, and (b) second virtual agent 242 deploying the second pod on second SNC 232. See also 271-272 and 281-282 in Fig. 2. Although discussed using a "first SNC" and a "second SNC," the examples in Fig. 3 may be implemented for any SNC(s). For example, based on cluster configuration information 230 in Fig. 2, third SNC (*SNC-*3) 233 and associated third virtual agent 243 may be configured to facilitate a deployment of third pod 283 on third SNC 233.

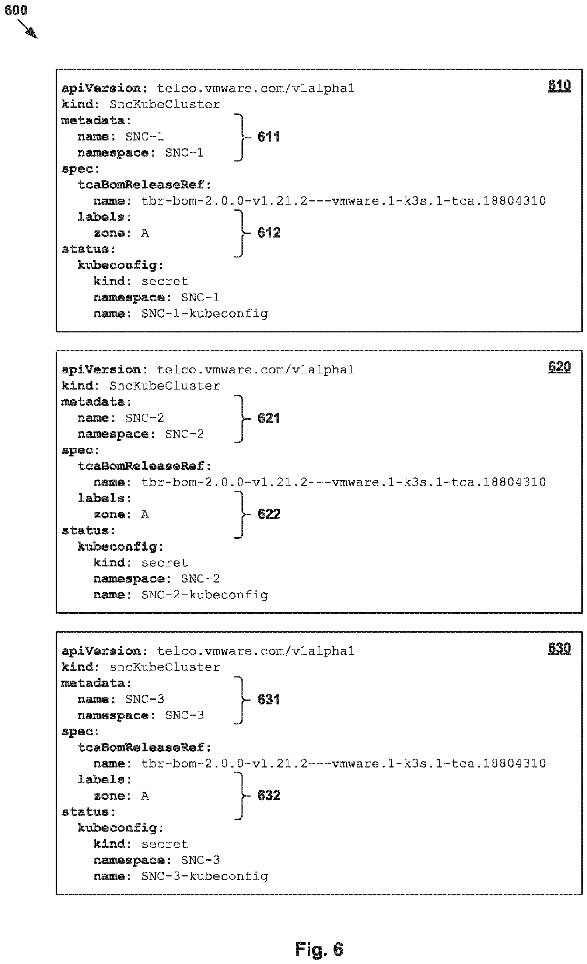

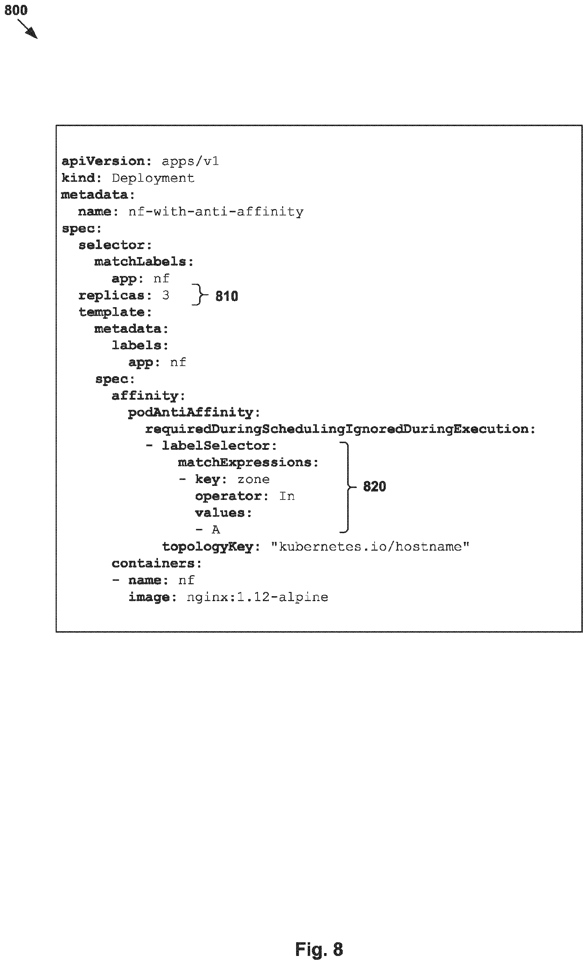

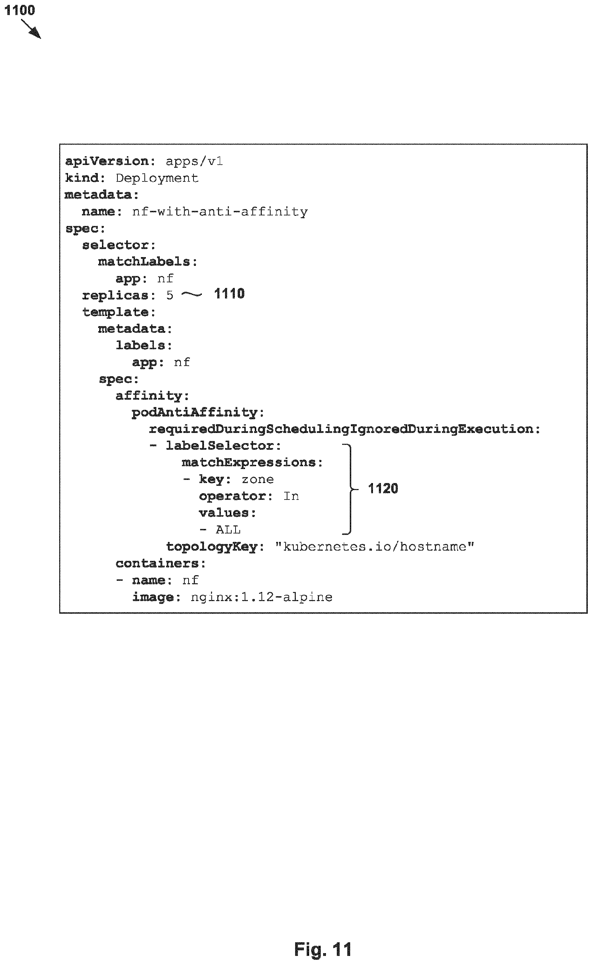

In practice, cluster configuration information (see 230 in Fig. 2 and 310 in Fig. 3) may be in the form of a Kubernetes custom resource (CR), examples of which will be discussed using Fig. 6. In general, a "resource" may refer generally to an endpoint in the Kubernetes API that stores a collection of API objects of a certain kind. A "custom resource" may refer generally to an extension or customization of a particular Kubernetes installation. Similarly, deployment requests may be in the form of deployment CRs, examples of which will be discussed using Fig. 8 and Fig. 11. To deploy pod 281/282 on SNC 231/232, virtual agents 241 may configure pod creation CR on SNC 231/232. Various examples will be discussed below.

### Example configuration

Fig. 4 is a flowchart of detailed example process 400 for a computer system to perform cloud native network function deployment. Example process 400 may include one or more operations, functions, or actions illustrated by one or more blocks, such as 410 to 485. Depending on the desired implementation, various blocks may be combined into fewer blocks, divided into additional blocks, and/or eliminated. The example in Fig. 4 will be explained using the example in Fig. 5, which is a schematic diagram illustrating first example 500 of cloud native network function deployment involving three SNCs.

### (a) Cluster configuration information

At 410-415 in Fig. 4, management cluster entity 220 may receive a request to configure multiple (*N*) SNC nodes (denoted as *SNC-i,* where *i* = 1, ... , *N*) based on cluster configuration information (see 410). In the example in Fig. 5, cluster configuration information 500 to configure three SNCs may be received from user device 202 operated by user 201 via any suitable interface 401, such as Ul, CLI, API, etc. Example cluster configuration information in the form of SNC CRs are shown in Fig. 6, which is a schematic diagram illustrating example SNC configuration information 600 for the example in Fig. 5.

Referring to Fig. 6, first CR 610 is to instruct management cluster entity 220 to create a first SNC that is assigned with name and namespace = "SNC-1." Similarly, second CR 620 is to instruct management cluster entity 220 to create a second SNC that is assigned with name and namespace = "SNC-2." Third CR 630 is to instruct management cluster entity 220 to create a third SNC that is assigned with name and namespace = "SNC-2." All three SNCs are assigned to the same zone label = "A," which may be used for node selection during pod deployment (to be discussed below). The label is also shown at 520 in Fig. 2.

### (b) SNC and virtual agent configuration

At 420 in Fig. 4, in response to receiving the cluster configuration information, management cluster entity 220 may create or configure the multiple (N) SNCs that are each denoted as *SNC-i,* where *i* = 1, ...,*N.* At 425 in Fig. 4, management cluster entity 220 may configure a virtual agent in the form of a virtual kubelet (denoted as *vKubelet-i*) associated with each *SNC-i.* See also virtual agents 241-243 in Fig. 5.

At 430 in Fig. 4, each virtual agent *(vKubelet-i)* may register *SNC-i* as a virtual worker node (denoted as *vWorker-i*) to, inter alia, leverage Kubernetes schedule's 222 management ability during pod deployment. Once registered, management cluster entity 220 may think that it has many worker nodes, but at least some actually virtual worker nodes in the form of SNCs. For example in Fig. 5, first SNC 231 is registered as a first virtual worker node (denoted as *vWorker-1*), second SNC 232 as a second virtual worker node (denoted as *vWorker-2)* and third SNC 233 as a third virtual worker node (denoted as *vWorker-*3). See 251-253 in Fig. 5.

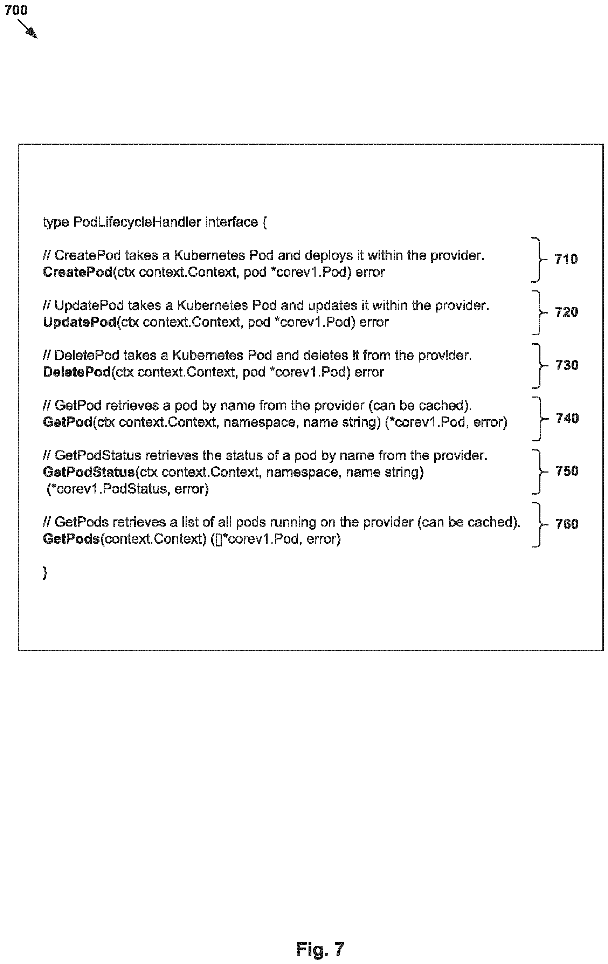

In practice, block 425 may involve configuring virtual kubelet to support any suitable API(s) to communicate or interact with SNC API. Some examples are shown in Fig. 7, which is a schematic diagram illustrating example APIs supported by a virtual agent in the form of a virtual kubelet. At 710 in Fig. 7, a "CreatePod" function is to deploy a particular Kubernetes pod within a cloud provider. At 720, an "UpdatePod" function is to update a deployed Kubernetes pod within the cloud provider. At 730, a "DeletePod" function is to delete or remove a particular Kubernetes pod. At 740, a "GetPod" function is to retrieve a pod by its name from the cloud provider. At 750, a "GetPodStatus" function is to retrieve status information associated with a pod by its name from the cloud provider. At 760, a "GetPods" function is to retrieve a list of all pods running on the cloud provider.

### (c) API proxy configuration

At 435-440 in Fig. 4, in response to determination that a particular *SNC-i* is behind a NAT gateway (see 501 in Fig. 5), its virtual agent *(vKubelet-i)* may establish a communication tunnel with the SNC via API proxy component 223 supported by management cluster entity 220. API proxy component 223 may configured to provide a tunnel proxy for *vKubelet-i* to connect with API(s) supported by *SNC-i.* At 445, management cluster entity 220 may detect the registration of *SNC-i* with API proxy component 223 to complete the process of establishing a communication tunnel between *vKubelet-i* and *SNC-i.* Depending on the desired implementation, the communication tunnel may be established between *vKubelet-i* and *SNC-i* regardless of whether *SNC-i* is located behind a NAT gateway.

For example in Fig. 5, first tunnel 531 may be established between first virtual agent 251 and first SNC 231, second tunnel 532 between second virtual agent 252 and second SNC 232, and third tunnel 533 between third virtual agent 253 and third SNC 233. Communication tunnels 531-533 may be referred to as NAT tunnels. In practice, NAT gateway 501 may be used so that instances in a private subnet may connect to services outside of a virtual network in which SNCs 231-233 are located. For example, for outbound traffic, NAT gateway 501 may replace an endpoint IP address with a public IP address associated with NAT gateway 501. For inbound traffic addressed to the public IP address, NAT gateway 501 may perform address translation back to the endpoint IP address.

### Pod deployment

### (a) Deployment request

At 445-450 in Fig. 4, management cluster entity 220 may receive a deployment request to deploy workloads in the form of cloud native network function(s) on multiple (N) SNCs 231-233. For example in Fig. 5, deployment request 540 may be in the form of a deployment CR. An example is shown in Fig. 8, which is a schematic diagram illustrating example deployment request 800 to deploy multiple pods across multiple SNCs 231-233 for the example in Fig. 5. Here, deployment CR 800 (see kind = Deployment) may request deployment of three pods (see 810) across SNCs matching a node selector in the form of zone label = "A" (see 820). The node selector is defined to constrain pod to node with a specific label.

A pod anti-affinity (see "podAntiAffinity) definition may be used to constrain pods against certain labels. With anti-affinity, the pods configured based on deployment CR 800 will be distributed to different worker nodes, which in turn facilitates high availability (HA) for service(s) running inside these pods. In the example in Fig. 8, three pods may be distributed across SNCs 231-233 based on the "replicas: 3" and "podAntiAffinity" configuration in deployment CR 800. In the event that one worker node is down, only one pod will be affected. This ensures that the service(s) will still be available on other worker nodes that are up and running.

### (b) Virtual node selection

At 460 in Fig. 4, based on the deployment CR, k8s scheduler 222 may select virtual worker nodes 251-253 assigned with zone label = "A," and send "CreatePod" requests to respective virtual agents 241-243 associated with virtual worker nodes 251-253. In example in Fig. 5, k8s scheduler 222 may generate and send first "CreatePod" request 551 to first virtual agent 241. Similarly, second request 552 may be generated and sent to second virtual agent 242, and third request 553 to third virtual agent 243. See "CreatePod" API function 710 in Fig. 7.

### (c) Pod creation request

At 465 in Fig. 4, in response to detecting "CreatePod" request 551/552/553, virtual agent 241/242/243 may deploy a pod on SNC 231/232/233. In the example in Fig. 5, block 465 may involve virtual agent 241/242/243 generating and sending a pod creation request in the form of a "Create Pod CR" 561/562/563 to SNC 231/232/233 assigned with the zone label = "A" specified by deployment CR 540. For example, first CR 561 is sent via API proxy component 223 to deploy first pod 281 on first SNC 231 associated with first virtual worker node 251 selected by k8s scheduler 222. Second CR 562 is to second pod 282 on second SNC 232 associated with second virtual worker node 252. Third CR 563 is to deploy third pod 283 on third SNC 233 associated with third virtual worker node 253.

An example will be discussed below using Fig. 11, which is a schematic diagram illustrating example pod creation request 900 generated and sent by virtual agent 241/242/243 to particular SNC 231/232/233. Here, example pod creation request 900 may be in the form of a CR specifying "kind: Pod" to cause SNC 231/232/233 to deploy a pod that includes at least one container. The container may be configured by specifying "name: nf" and an associated image, where "nf" represents a network function. In practice, any suitable name may be configured for a pod, and each of its container(s). In the example in Fig. 5, "Create pod CR" API 561/562/563 may be forwarded to SNC 231/232/233 via API proxy component 223, which is capable of identifying the correct tunnel 531/532/533 associated with SNC 231/232/233. For example, API proxy component 223 may identify or select tunnel 531/532/533 based on an SNC name or ID specified in a uniform resource locator (URL) associated with the "Create pod CR" API.

### (d) Health checks

At 470-475 in Fig. 4, in response to receiving a query for status information associated with a particular *SNC-i,* k8s scheduler 222 may query pod status from its virtual agent *(vKubelet-i)* using the GetPodStatus API (see 750 in Fig. 7). At 480-485, the virtual agent *(vKubelet-i)* obtain status information associated with a pod deployed on *SNC-i* and report it to the query originator. Using examples of the present disclosure, the scheduling and health check ability of native k8s scheduler 222 may be leveraged for SNCs 231-233.

### Hybrid deployment model

Examples of the present disclosure may be implemented to facilitate a hybrid deployment model that involves both SNC(s) and stretched cluster(s). Using the example in Fig. 1, SNCs may be configured to implement network functions associated with 5G RAN 120 and stretched cluster(s) to implement network functions associated with 5G core 130. In this case, computer system 210 may provide a unified deployment platform for both 5G RAN and 5G core containerized network functions.

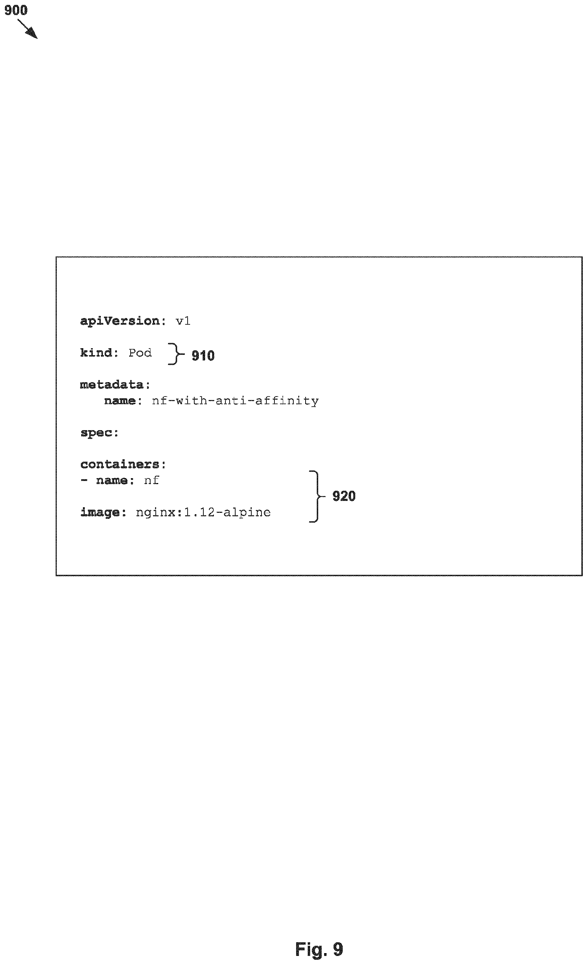

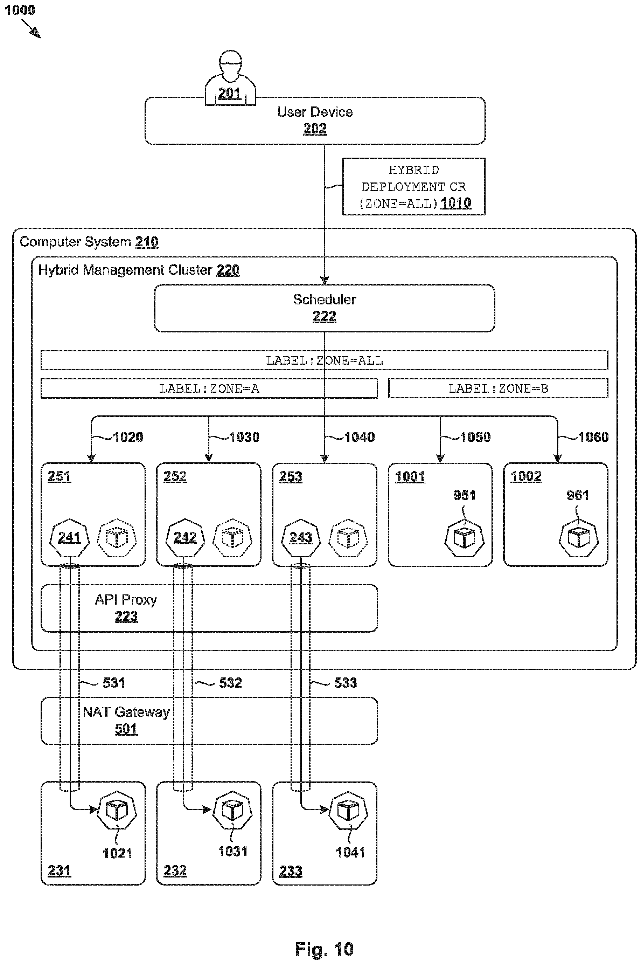

Some examples will be discussed using Fig. 10, which is a schematic diagram illustrating second example 1000 of cloud native network function deployment according to a hybrid mode. In this example, SNCs 231-233 and virtual agents 241-243 may be configured according to the examples in Figs. 4-9. SNCs 231-233 (and associated virtual worker nodes 251-253) may be assigned with zone label = "A." Non-virtual worker nodes 1001-1002 forming stretched cluster(s) are assigned with zone label = "B." All virtual and non-virtual worker nodes are assigned with zone label = "ALL."

At 1010 in Fig. 10, computer system 210 may receive a deployment request. An example is shown in Fig. 11, which is a schematic diagram illustrating example deployment request 1010/1100 to deploy multiple pods across multiple SNCs and stretched clusters for the example in Fig. 10. Referring to Fig. 11, deployment request 1010/1000 may specify the number of replicas = 5 to be deployed (see 1110), and a node selector in the form of zone label = "ALL" (see 1120). In response to receiving deployment request 1010/1100, k8s scheduler 222 may select both virtual worker nodes 251-253 and non-virtual worker nodes 1001-1002 for pod deployment.

At 1020 in Fig. 10, k8s scheduler 222 may instruct virtual agent 241 to deploy first pod 1021 on SNC 231 via the CreatePod API (see 710 in Fig. 7). Similarly, at 1030-1040, virtual agents 242-243 may be instructed to deploy second and third pods 1022-1023 on respective SNCs 232-233 based on the selection of virtual nodes 252-253. At 1050-1060, k8s scheduler 222 may instruct or interact with non-virtual worker nodes 1001-1002 directly to cause the deployment of fourth pod 1051 and fifth pod 1052. Various implementation details relating to pod deployment on SNCs 231-233 are applicable in this hybrid deployment model. The details are not repeated here for brevity.

### Physical implementation view

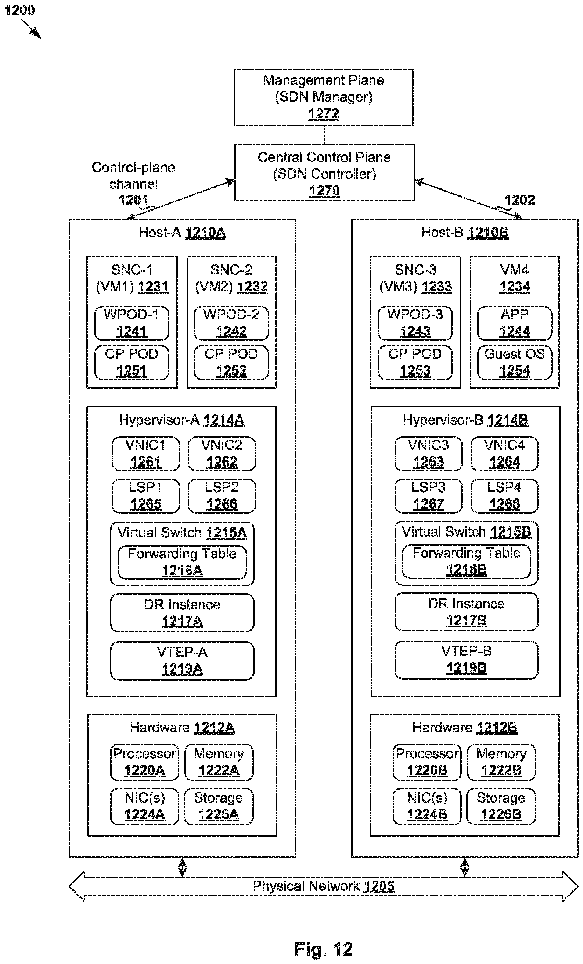

Depending on the desired implementation, an SNC deployed on a node (e.g., VM) may include any suitable pods, such as control plane pod(s) and worker pod(s). A pod is generally the smallest execution unit in Kubernetes and may be used to encapsulate one or more applications. Some example pods are shown in Fig. 12, which is a schematic diagram illustrating example software-defined networking (SDN) environment 1200 in which one or more pods may be deployed. Depending on the desired implementation, SDN environment 1200 may include additional and/or alternative components than that shown in Fig. 12.

In practice, SDN environment 1200 may represent a private or public cloud environment. Example public cloud providers may include Azure from Microsoft Corporation, Amazon Web Services (AWS) from Amazon Technologies, Inc., Google Cloud Platform (GCP) from Google LLC, Alibaba Cloud (AliCloud) from Alibaba Group, etc. Note that SDN environment 1200 may include any number of hosts, such as hosts 1210A-B (also known as "computer systems," "computing devices", "host computers).

Host 1210A/1210B may include suitable hardware 1212A/1212B and virtualization software (e.g., hypervisor-A 1214A, hypervisor-B 1214B) to support various VMs. For example, host-A 1210A may support VM1 1231 on which a worker pod (see WPOD-1 1241) and a control plane pod (see CP POD 1251) of SNC-1 are running. Host-A 1210A may also support VM2 1232 on which a worker pod (see WPOD-2 1242) and a control plane pod (see CP POD 1252) of SNC-2 are running. Host-B 1210B may also support VM3 1233 on which a worker pod (see WPOD-2 1243) and a control plane pod (see CP POD 1253) of SNC-3 are running. Host-B 1210B may also support VM4 1234 that includes application(s) 1244 and guest OS 1254. Hardware 1212A/1212B includes suitable physical components, such as central processing unit(s) (CPU(s)) or processor(s) 1220A/1220B; memory 1222A/1222B; physical network interface controllers (PNICs) 1224A/1224B; and storage disk(s) 1226A/1226B, etc.

Hypervisor 1214A/1214B maintains a mapping between underlying hardware 1212A/1212B and virtual resources allocated to respective VMs. Virtual resources are allocated to respective VMs 1231-1233 to support a guest operating system (OS; not shown for simplicity) and application(s); see 1251-1253. For example, the virtual resources may include virtual CPU, guest physical memory, virtual disk, virtual network interface controller (VNIC), etc. Hardware resources may be emulated using virtual machine monitors (VMMs). For example in Fig. 12, VNICs 1261-1264 are virtual network adapters, respectively, and are emulated by corresponding VMMs (not shown) instantiated by their respective hypervisor at respective host-A 1210A and host-B 1210B. The VMMs may be considered as part of respective VMs, or alternatively, separated from the VMs. Although one-to-one relationships are shown, one VM may be associated with multiple VNICs (each VNIC having its own network address).

Although examples of the present disclosure refer to VMs, it should be understood that a "virtual machine" running on a host is merely one example of a "virtualized computing instance" or "workload." A virtualized computing instance may represent an addressable data compute node (DCN) or isolated user space instance. In practice, any suitable technology may be used to provide isolated user space instances, not just hardware virtualization. Other virtualized computing instances may include containers (e.g., running within a VM or on top of a host operating system without the need for a hypervisor or separate operating system or implemented as an operating system level virtualization), virtual private servers, client computers, etc. Such container technology is available from, among others, Docker, Inc. The VMs may also be complete computational environments, containing virtual equivalents of the hardware and software components of a physical computing system.

The term "hypervisor" may refer generally to a software layer or component that supports the execution of multiple virtualized computing instances, including system-level software in guest VMs that supports namespace containers such as Docker, etc. Hypervisors 1214A-B may each implement any suitable virtualization technology, such as VMware ESX^{®} or ESXi^{™} (available from VMware, Inc.), Kernel-based Virtual Machine (KVM), etc. The term "packet" may refer generally to a group of bits that can be transported together, and may be in another form, such as "frame," "message," "segment," etc. The term "traffic" or "flow" may refer generally to multiple packets. The term "layer-2" may refer generally to a link layer or media access control (MAC) layer; "layer-3" a network or Internet Protocol (IP) layer; and "layer-4" a transport layer (e.g., using TCP, User Datagram Protocol (UDP), etc.), in the Open System Interconnection (OSI) model, although the concepts described herein may be used with other networking models.

SDN controller 1270 and SDN manager 1272 are example network management entities in SDN environment 1200. One example of an SDN controller is the NSX controller component of VMware NSX^{®} (available from VMware, Inc.) that operates on a central control plane. SDN controller 1270 may be a member of a controller cluster (not shown for simplicity) that is configurable using SDN manager 1272. Network management entity 1270/1272 may be implemented using physical machine(s), VM(s), or both. To send or receive control information, a local control plane (LCP) agent (not shown) on host 1210A/1210B may interact with SDN controller 1270 via control-plane channel 1201/1202.

Through virtualization of networking services in SDN environment 1200, logical networks (also referred to as overlay networks or logical overlay networks) may be provisioned, changed, stored, deleted and restored programmatically without having to reconfigure the underlying physical hardware architecture. Hypervisor 1214A/1214B implements virtual switch 1215A/1215B and logical distributed router (DR) instance 1217A/1217B to handle egress packets from, and ingress packets to, VMs 1231-1233. In SDN environment 1200, logical switches and logical DRs may be implemented in a distributed manner and can span multiple hosts.

For example, a logical switch (LS) may be deployed to provide logical layer-2 connectivity (i.e., an overlay network) to VMs 1231-1233. A logical switch may be implemented collectively by virtual switches 1215A-B and represented internally using forwarding tables 1216A-B at respective virtual switches 1215A-B. Forwarding tables 1216A-B may each include entries that collectively implement the respective logical switches. Further, logical DRs that provide logical layer-3 connectivity may be implemented collectively by DR instances 1217A-B and represented internally using routing tables (not shown) at respective DR instances 1217A-B. Each routing table may include entries that collectively implement the respective logical DRs.

Packets may be received from, or sent to, each VM via an associated logical port (see 1265-1268). Here, the term "logical port" or "logical switch port" may refer generally to a port on a logical switch to which a virtualized computing instance is connected. A "logical switch" may refer generally to a software-defined networking (SDN) construct that is collectively implemented by virtual switches 1215A-B, whereas a "virtual switch" may refer generally to a software switch or software implementation of a physical switch. In practice, there is usually a one-to-one mapping between a logical port on a logical switch and a virtual port on virtual switch 1215A/1215B. However, the mapping may change in some scenarios, such as when the logical port is mapped to a different virtual port on a different virtual switch after migration of the corresponding virtualized computing instance (e.g., when the source host and destination host do not have a distributed virtual switch spanning them).

A logical overlay network may be formed using any suitable tunneling protocol, such as Virtual extensible Local Area Network (VXLAN), Stateless Transport Tunneling (STT), Generic Network Virtualization Encapsulation (GENEVE), Generic Routing Encapsulation (GRE), etc. For example, VXLAN is a layer-2 overlay scheme on a layer-3 network that uses tunnel encapsulation to extend layer-2 segments across multiple hosts which may reside on different physical networks. Hypervisor 1214A/1214B may implement virtual tunnel endpoint (VTEP) 1219A/1219B to encapsulate and decapsulate packets with an outer header (also known as a tunnel header) identifying the relevant logical overlay network (e.g., VNI). Hosts 1210A-B may maintain data-plane connectivity with each other via physical network 1205 to facilitate east-west communication among VMs 1231-1233.

The above examples can be implemented by hardware (including hardware logic circuitry), software or firmware or a combination thereof. The above examples may be implemented by any suitable computing device, computer system, etc. The computer system may include processor(s), memory unit(s) and physical NIC(s) that may communicate with each other via a communication bus, etc. The computer system may include a non-transitory computer-readable medium having stored thereon instructions or program code that, when executed by the processor, cause the processor to perform processes described herein with reference to Fig. 1 to Fig. 12.

The techniques introduced above can be implemented in special-purpose hardwired circuitry, in software and/or firmware in conjunction with programmable circuitry, or in a combination thereof. Special-purpose hardwired circuitry may be in the form of, for example, one or more application-specific integrated circuits (ASICs), programmable logic devices (PLDs), field-programmable gate arrays (FPGAs), and others. The term 'processor' is to be interpreted broadly to include a processing unit, ASIC, logic unit, or programmable gate array etc.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples can be implemented, individually and/or collectively, by a wide range of hardware, software, firmware, or any combination thereof.

Those skilled in the art will recognize that some aspects of the embodiments disclosed herein, in whole or in part, can be equivalently implemented in integrated circuits, as one or more computer programs running on one or more computers (e.g., as one or more programs running on one or more computing systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure.

Software and/or to implement the techniques introduced here may be stored on a non-transitory computer-readable storage medium and may be executed by one or more general-purpose or special-purpose programmable microprocessors. A "computer-readable storage medium", as the term is used herein, includes any mechanism that provides (i.e., stores and/or transmits) information in a form accessible by a machine (e.g., a computer, network device, personal digital assistant (PDA), mobile device, manufacturing tool, any device with a set of one or more processors, etc.). A computer-readable storage medium may include recordable/non recordable media (e.g., read-only memory (ROM), random access memory (RAM), magnetic disk or optical storage media, flash memory devices, etc.).

The drawings are only illustrations of an example, wherein the units or procedure shown in the drawings are not necessarily essential for implementing the present disclosure. Those skilled in the art will understand that the units in the device in the examples can be arranged in the device in the examples as described or can be alternatively located in one or more devices different from that in the examples. The units in the examples described can be combined into one module or further divided into a plurality of sub-units.

## Claims

1. A method for a computer system to perform cloud native network function deployment, wherein the method comprises:
obtaining cluster configuration information associated with multiple single node clusters (SNCs) that include at least (a) a first SNC and (b) a second SNC that are capable of implementing one or more cloud native network functions;
based on the cluster configuration information, configuring (a) the first SNC on a first node and (b) the second SNC on a second node;
configuring (a) a first virtual agent associated with the first SNC, and (b) a second virtual agent associated with the second SNC; and
in response to receiving a deployment request to deploy a first pod and a second pod, processing the deployment request by (a) deploying, using the first virtual agent, the first pod on the first SNC, and (b) deploying, using the second virtual agent, the second pod on the second SNC.

2. The method of claim 1, wherein
configuring the first virtual agent and the second virtual agent comprises:
registering, by the first virtual agent in the form of a first virtual kubelet, the first SNC as a first virtual node; and
registering, by the second virtual agent in the form of a second virtual kubelet, the second SNC as a second virtual node.

3. The method of claim 2, wherein
processing the deployment request comprises:
selecting, by a scheduler supported by the computer system, the first virtual node and the second virtual node based on a label specified by the deployment request; and
generating and sending, by the scheduler, (a) a first pod creation request to cause the first virtual agent to deploy the first pod on the first SNC, and (b) a second pod creation request to cause the second virtual agent to deploy the second pod on the second SNC.

4. The method of any one of the claims 1 to 3, wherein
processing the deployment request comprises:
configuring, by the first virtual agent, a first pod creation custom resource (CR) on the first SNC to deploy the first pod on the first SNC; and
configuring, by the second virtual agent, a second pod creation CR on the second SNC to deploy the second pod on the second SNC.

5. The method of any one of the claims 1 to 4, wherein
processing the deployment request comprises:
deploying, using the first virtual agent, the first pod on the first SNC via an application programming interface (API) proxy component; and
deploying, using the second virtual agent, the second pod on the second SNC via the API proxy component.

6. The method of claim 5, wherein the method further comprises:
prior to processing the deployment request,
establishing (a) a first communication tunnel between the first virtual agent and the first SNC via the API proxy component, and (b) a second communication tunnel between the second virtual agent and the second SNC via the API proxy component, wherein
the first SNC and the second SNC are located behind a network address translation (NAT) gateway.

7. The method of any one of the claims 1 to 6, wherein
receiving and processing the deployment request comprises:
receiving the deployment request that is associated with hybrid mode deployment, wherein the deployment request specifies a label that is assigned to the first SNC, the second SNC and at least one worker node associated with a stretched cluster; and
processing the deployment request by deploying (a) the first pod on the first SNC, (b) a second pod on the second SNC, and (c) a further pod on the at least one worker node associated with a stretched cluster.

8. A non-transitory computer-readable storage medium that includes a set of instructions which, in response to execution by a processor of a computer system, cause the processor to perform a method as set forth in any one of the preceding claims.

9. A computer system, comprising:
a processor; and
a non-transitory computer-readable medium having stored thereon instructions that, when executed by the processor, cause the processor to perform the following:
configure multiple single node clusters (SNCs) that include (a) a first SNC on a first node and (b) a second SNC on a second node, wherein the first SNC and second SNC are capable of implementing one or more cloud native network functions;
configure (a) a first virtual agent associated with the first SNC, and (b) a second virtual agent associated with the second SNC;
establish (a) a first communication tunnel between the first virtual agent and the first SNC and (b) a second communication tunnel between the second virtual agent and the second SNC; and
in response to receiving a deployment request to deploy a first pod and a second pod, processing the deployment request by (a) deploying, using the first virtual agent, the first pod on the first SNC via the first communication tunnel, and (b) deploying, using the second virtual agent, the second pod on the second SNC via the second communication tunnel.

10. The computer system of claim 9, wherein the instructions for establishing the first communication tunnel and the second communication tunnel cause the processor to:
establishing the first communication tunnel and the second communication tunnel via an application programming interface (API) proxy component supported by the computer system, wherein the first SNC and the second SNC are located behind a network address translation (NAT) gateway.

11. The computer system of claim 10, wherein
the instructions for processing the deployment request cause the processor to:
deploy, using the first virtual agent, the first pod on the first SNC via the API proxy component; and
deploy, using the second virtual agent, the second pod on the second SNC via the API proxy component.

12. The computer system of any one of the claims 9 to 11, wherein the instructions for configuring the first virtual agent and the second virtual agent cause the processor to:
register, by the first virtual agent in the form of a first virtual kubelet, the first SNC as a first virtual node; and
register, by the second virtual agent in the form of a second virtual kubelet, the second SNC as a second virtual node.

13. The computer system of claim 12, wherein
the instructions for processing the deployment request cause the processor to:
select, by a scheduler supported by the computer system, the first virtual node and the second virtual node based on a label specified by the deployment request; and
generate and send, by the scheduler, (a) a first pod creation request to cause the first virtual agent to deploy the first pod on the first SNC, and (b) a second pod creation request to cause the second virtual agent to deploy the second pod on the second SNC.

14. The computer system of any one of the claims 9 to 13, wherein the instructions for processing the deployment request cause the processor to:
configure, by the first virtual agent, a first pod creation custom resource (CR) on the first SNC to deploy the first pod on the first SNC; and
configure, by the second virtual agent, a second pod creation CR on the second SNC to deploy the second pod on the second SNC.

15. The computer system of any one of the claims 9 to 14, wherein
the instructions for receiving and processing the deployment request cause the processor to:
receive the deployment request that is associated with hybrid deployment, wherein the deployment request specifies a label that is assigned to the first SNC, the second SNC and at least one worker node associated with a stretched cluster; and
process the deployment request by deploying (a) the first pod on the first SNC, (b) a second pod on the second SNC, and (c) a further pod on the at least one worker node associated with a stretched cluster.
